# EUROPÄISCHE PATENTSCHRIFT

(11) **EP 1 896 309 B1**
(45) Veröffentlichungstag und Bekanntmachung des Hinweises auf die Patenterteilung: **18.02.2009**
(21) Anmeldenummer: 06742933.2
(22) Anmeldetag: 05.05.2006
(51) Int. Cl.: B60T 13/74, B60T 8/42

(54) **VORRICHTUNG UND VERFAHREN ZUR ELEKTROMECHANISCHEN BREMSUNTERSTÜTZUNG**
DEVICE AND METHOD FOR ELECTROMECHANICAL BRAKE SERVO ASSISTANCE
DISPOSITIF ET PROCEDE D'ASSISTANCE AU FREINAGE ELECTROMECANIQUE

(30) Priorität: 25.05.2005 DE 102005024577
(43) Veröffentlichungstag der Anmeldung: 12.03.2008
(73) Patentinhaber: Volkswagen Aktiengesellschaft, 38436 Wolfsburg (DE); TRW Automotive, Lucas Automotive Gmbh, 56070 Koblenz (DE)
(72) Erfinder: WITTE, Bastian, 38179 Gross Schwülper (DE); BARTHENHEIER, Thomas, 38106 Braunschweig (DE); LANG, Hans, 93055 Regensburg (DE); WITTE, Klaus, 65719 Hofheim (DE); OHLIG, Benedikt, 56179 Vallendar (DE)
(74) Vertreter: Zucker, Volker
(86) Internationale Anmeldenummer: PCT/EP2006/004589
(87) Internationale Veröffentlichungsnummer: WO 2006/125547

(56) Entgegenhaltungen:
- DE-A1- 10 327 553
- US-A- 4 918 921
- US-A- 5 320 421

## Beschreibung

Die Erfindung betrifft eine Vorrichtung und ein Verfahren zur elektromechanischen Bremsunterstützung von Fahrzeugen.

Elektromechanische Bremskraftverstärker, bei welchen eine Unterstützungskraft durch einen elektrischen Servomotor zusätzlich zu einem durch einen Fahrer mittels eines Bremspedals über eine durchgehend mechanische Verbindung vorgegebenen Bremswunsch aufgebracht wird, sind bereits bekannt. So offenbart beispielsweise die DE10327553 A1 einen elektromechanischen Bremskraftverstärker, umfassend eine Kolbenstange zur direkten Verbindung eines Bremspedals mit einem Kolben eines Hauptbremszylinders, einen elektrischen Motor mit einem Stator und einem Rotor, die konzentrisch um die Kolbenstange angeordnet sind, und einen Spindeltrieb mit einer drehfest gelagerten, axial bewegbaren Spindelschraube, welche über den Rotor des Motors angetrieben ist und bei Aktivierung des Motors zur Bremskraftverstärkung gegen einen Mitnehmer anläuft und diesen in Richtung des Hauptbremszylinders drückt. Dabei ist im Falle einer Regelung des Bremskraftverstärkers neben einem Sensor zum Erfassen der an der Kolbenstange wirksamen Pedalkraft ein Sensor zum Erfassen der Ist-Summenkraft aus der Pedalkraft und der Verstärkungskraft vorgesehen. Aus der Pedalkraft wird dann ein Sollwert für die Summenkraft errechnet. Die Differenz zu der erfassten Summenkraft wird über den Elektromotor ausgeregelt. Die Ist-Summenkraft wird dabei bevorzugt aus einem am Einlass einer ESP-Hydraulikeinheit anliegenden ESP-Vordruck berechnet, der mittels eines Drucksensors erfasst wird und der proportional zur Ist-Summenkraft ist.

Nachteilig an dieser Vorgehensweise ist, dass die Abhängigkeit des tatsächlichen Ist-Bremsdrucks an den Fahrzeugrädern von dem für die Zwecke der Regelung gemessenen Druck nicht immer konstant ist, sondern Schwankungen unterworfen ist, welche von mehreren Parametern abhängen, z.B. Scheibenschlag, Temperatur und Betätigungsgeschwindigkeit. Wird beispielsweise lediglich der in einer Vorrichtung zur Regulierung der Fahrzeugstabilität gemessene Vordruck als Ist-Größe für die Regelung des elektromechanischen Bremskraftverstärkers herangezogen, so kann es aufgrund der in der Vorrichtung zur Regulierung der Fahrzeugstabilität verwendeten Ventile zunächst zu starken Druckunterschieden zwischen dem gemessenen Vordruck und dem tatsächlichen Ist-Druck an den Fahrzeugrädern kommen, bis sich letztendlich ein stationärer Zustand eingestellt hat. Darunter leidet jedoch die Regelqualität des elektromechanischen Bremskraftverstärkers und führt gegebenenfalls zu nicht zufrieden stellenden Ergebnissen bezüglich der vom Regler eingestellten Unterstützungskraft.

Document US-A-4,918,921 offenbart die Oberbegriffe der Ansprüchen 1 und 14.

Der Erfindung liegt das technische Problem zugrunde, eine verbesserte Vorrichtung und ein verbessertes Verfahren zur elektromechanischen Bremsunterstützung schaffen.

Die Lösung des technischen Problems ergibt sich erfindungsgemäß durch die Gegenstände der Ansprüche 1 und 14. Weitere vorteilhafte Ausgestaltungen der Erfindung ergeben sich aus den Unteransprüchen.

Der Erfindung liegt dabei die Erkenntnis zugrunde, dass die Regelqualität des elektromechanischen Bremskraftverstärkers erhöht werden kann, wenn der an den Fahrzeugrädern anliegende Bremsdruck mit der Betriebsposition der für den elektromechanischen Bremskraftverstärker verwendeten elektrischen Stelleinrichtung, beispielsweise einem Servomotor, korreliert und dann statt einer herkömmlichen Druckregelung, die den Vordruck in einer Vorrichtung zur Regulierung der Fahrzeugstabilität als Ist-Größe verwendet, eine Motorpositionsregelung verwendet wird. Dies wird erfindungsgemäß gelöst, indem eine Vorrichtung zur elektromechanischen Bremsunterstützung von Fahrzeugen vorgeschlagen wird, umfassend ein durch einen Fahrer beeinflussbares Eingabemittel, das mit mindestens einem Bremszylinder antreibend verbunden ist, sowie eine elektrische Stelleinrichtung, die zur Betätigung des mindestens einen Bremszylinders in mindestens einer Richtung vorgesehen ist, wobei in mindestens einem Rechenmittel eine Unterstützungskraft ermittelbar ist, die Unterstützungskraft durch die elektrische Stelleinrichtung aufbringbar ist, ein erster Sensor zur Erzeugung eines quantitativen Signals bezüglich der relativen Betriebsposition der elektrischen Stelleinrichtung vorgesehen ist, ein zweiter Sensor zur Erzeugung eines qualitativen Signals bezüglich der ungefähren Betriebsposition der elektrischen Stelleinrichtung vorgesehen ist und mit Hilfe des Rechenmittels aus dem quantitativen und dem qualitativen Signal die momentane absolute Betriebsposition der elektrischen Stelleinrichtung ermittelbar und daraus eine Bremszustandsgröße F1 ableitbar ist, die einem Ist-Zustand eines Bremsvorgangs entspricht. Sofern die Kennlinie bekannt ist, die den Zusammenhang zwischen dem an den Fahrzeugrädern anliegenden Bremsdruck und der jeweiligen zugeordneten Betriebsposition der elektrischen Stelleinrichtung beschreibt, kann aus letzterer der momentan vorliegende Ist-Zustand des Bremsvorgangs, welcher für die Regelung der Bremskraftverstärkung möglichst exakt bekannt sein muss und welcher ansonsten beispielsweise an den Fahrzeugrädern gemessen werden kann, auf einfache, kostengünstige und qualitativ zufrieden stellende Weise ermittelt werden. Unter der Betriebsposition kann dabei beispielsweise die Stellung des Rotors eines Elektromotors verstanden werden. Da diese jedoch in der Regel nicht über den gesamten Betriebsbereich mit Hilfe eines einzigen Sensors in ausreichender Auflösung dargestellt werden kann, sind hierzu mindestens zwei Sensoren notwendig. Dabei liefert der erste Sensor ein quantitatives Signal, welches eine vergleichsweise hohe Auflösung bietet, dies jedoch lediglich bezüglich einer relativen Betriebsposition der elektrischen Stelleinrichtung. D.h. das Signal ist nur bereichsweise eindeutig und kann innerhalb unterschiedlicher Betriebsbereiche der elektrischen Stelleinrichtung periodisch wiederkehren, beispielsweise als Drehwinkel des Rotors eines Elektromotors. Der zweite Sensor liefert demgegenüber ein qualitatives Signal, welches zwar über den gesamten Betriebsbereich der elektrischen Stelleinrichtung eindeutig ist, jedoch nur eine vergleichsweise grobe Auflösung bezüglich der absoluten Betriebsposition zulässt. Das qualitative Signal kann beispielsweise auf der Messung einer ausgeübten Kraft und/oder eines Druckes beruhen oder auch auf der Zählung von Umdrehungen des Rotors eines Elektromotors. Aus der Kombination beider Signale, die jeweils für sich allein genommen keine zufrieden stellende Aussage über die momentane Betriebsposition der elektrischen Stellvorrichtung zulassen, kann dann diesbezüglich in Kenntnis der gegenseitigen Abhängigkeit der beiden Signale eine genaue und eindeutige Aussage getroffen werden.

In einer vorteilhaften Ausführungsform ist die elektrische Stelleinrichtung als Servomotor ausgebildet. Dabei können bevorzugt Servomotoren zum Einsatz kommen, die als Gleichstrommotoren ausgebildet sind. Es ist jedoch des Weiteren auch denkbar, dass als elektrische Stelleinrichtung andere Arten von Elektromotoren, beispielsweise ein Drehstrommotor, ein Asynchronmotor oder beliebige Varianten eines Schrittmotors verwendet werden.

In einer weiteren vorteilhaften Ausführungsform ist der Servomotor als bürstenloser Gleichstrommotor ausgebildet. Bürstenlose, d.h. elektronisch kommutierte Motoren besitzen insbesondere gegenüber herkömmlichen Induktionsmotoren unter anderem die Vorteile eines besseren Wirkungsgrades, eines kleineren Bauvolumens sowie eines geringeren Gewichts, somit einer höheren Leistungsdichte sowie eines geringeren Verschleißes.

In einer weiteren vorteilhaften Ausführungsform ist der erste Sensor als Drehwinkelsensor ausgebildet, durch den die relative Position des Rotors des Servomotors ermittelbar ist. Bei der Verwendung eines Elektromotors als elektrische Stelleinrichtung bietet sich für die Bestimmung der relativen Betriebsposition die Position des Rotors als einfach messbare Größe an. Dies ist insbesondere bei elektronisch kommutierten Motoren von Vorteil, da diese ohnehin einen Drehwinkelsensor zur Kommutierung verwenden und somit kein zusätzlicher Sensor benötigt wird. Bevorzugt ist dabei der Drehwinkelsensor als Resolver ausgebildet, d.h. als elektrisch-induktiver Drehmelder, der die Information über die Winkelstellung des Rotors analog in codierter Form einer Sinus- und einer Cosinus-Amplitude liefert. Es sind des Weiteren jedoch auch jegliche andere Arten von Drehmeldern, Encodern oder Drehgebern induktiver oder anderer Art denkbar. Die Information, die ein Drehwinkelsensor bezüglich der Winkelposition des Rotors liefert, ist selbst bei hoher Auflösung jedoch stets lediglich relativ, da ein einzelner Drehwinkelsensor naturgemäß keinen Absolutwinkel größer als 360° darstellen kann. Spätestens nach einer Umdrehung des Rotors wird demnach der Messwert vieldeutig. Abhängig von der Polzahl des Elektromotors ist das quantitative Signal auch nur innerhalb eines noch geringeren Teilbereichs eindeutig, liefert also nur für einen bestimmten Teilbereich einer Umdrehung eine für sich aussagekräftige Winkelauflösung, weswegen für die Bestimmung der absoluten Betriebsposition eine zusätzliche Klassifizierung des quantitativen Signals notwendig ist.

In einer bevorzugten Ausführungsform ist der zweite Sensor als Drucksensor zur Auswertung des Drucks in dem mindestens einen Bremszylinder vorgesehen, wobei einem ermittelten Druckbereich eine ungefähre Betriebsposition der elektrischen Stelleinrichtung eindeutig zuordenbar ist. Liegt das quantitative Signal des ersten Sensors zur Bestimmung der relativen Betriebsposition der elektrischen Stelleinrichtung lediglich mehrdeutig vor, so kann in einfacher Weise der Druckbereich des Bremszylinders in Form eines qualitativen Signals als Zuordnungsgröße herangezogen werden, um das quantitative Signal des ersten Sensors einer absoluten Betriebsposition der elektrischen Stelleinrichtung, beispielsweise einem Pedal- oder Kolbenweg oder einem bestimmten Motorwinkel, zuzuordnen. Zwar ist die Abhängigkeit zwischen der absoluten Betriebsposition der elektrischen Stelleinrichtung und dem Druck im Bremszylinder nicht immer konstant und von mehreren Parametern abhängig, wie beispielsweise Scheibenschlag, Temperatur oder Betätigungsgeschwindigkeit, weswegen der Bremsdruck selbst nur einen Grobmesswert zur Bestimmung der absoluten Betriebsposition der elektrischen Stelleinrichtung liefert und demnach als einzige verwendete Messgröße nur wenig tauglich ist. Es besteht jedoch dennoch ein grundsätzlich bekannter Zusammenhang zwischen dem Weg des Primärkolbens, d.h. der Betriebsposition der elektrischen Stelleinrichtung (beispielsweise dem Winkel des Servomotors) und dem vorliegenden Bremsdruck. Da beispielsweise bei einer bevorzugten Ausführungsform der gesamte Betriebsdruckbereich von 0-150 bar bevorzugt mit etwa fünf Umdrehungen eines Servomotors durchschritten wird, ist auf diese Weise eine Klassifizierung des quantitativen Signals des ersten Sensors anhand des jeweiligen Drucks sehr gut möglich. Der als Drucksensor ausgebildete zweite Sensor ist dabei bevorzugt am Bremszylinder selbst angebracht. Es ist jedoch auch vorstellbar, dass der Drucksensor beispielsweise als Vordrucksensor Teil einer Vorrichtung zur Regulierung der Fahrzeugstabilität ist, was den Vorteil bietet, dass kein zusätzlicher Sensor notwendig ist, sondern ein ohnehin vorhandener Sensor verwendet werden kann. Optional ist auch vorstellbar, dass jeder Bremskreis aus Redundanzgründen mit einem eigenen Drucksensor ausgestattet ist.

In einer bevorzugten Ausführungsform ist dem ermittelten Druckbereich eine Winkelklasse eindeutig zuordenbar, mit deren Hilfe aus dem quantitativen Signal die momentane absolute Betriebsposition der elektrischen Stelleinrichtung ermittelbar ist. Da das quantitative Signal des ersten Sensors zur Bestimmung der relativen Betriebsposition der elektrischen Stelleinrichtung in der Regel lediglich mehrdeutig vorliegt und der ermittelte Druckbereich des Bremszylinders in Form eines qualitativen Signals als Zuordnungsgröße herangezogen wird, um das quantitative Signal des ersten Sensors bevorzugt einem bestimmten absoluten Drehwinkel des Rotors des Servomotors zuzuordnen, ist es von Vorteil, wenn jedem Druckbereich eine Winkelklasse des Servomotors, d.h. ein Bereich, innerhalb dessen das quantitative Signal des ersten Sensors jeweils eindeutig ist, zugeordnet wird. Bei den Winkelklassen kann es sich beispielsweise um Umdrehungen oder Teilumdrehungen, d.h. Quadranten, eines Servomotors handeln, innerhalb derer das quantitative Signal des ersten Sensors jeweils eindeutig ist, d.h. für diesen Teilbereich eine für sich aussagekräftige Winkelauflösung liefert.

In einer bevorzugten Ausführungsform ist der mindestens eine Bremszylinder als Hauptbremszylinder der Bremsanlage eines Fahrzeugs ausgebildet. Typischerweise ist der Bremszylinder als Tandem-Hauptbremszylinder ausgebildet, der einen Primär- sowie einen Sekundärkreislauf der Bremsanlage mit Druck beaufschlagen kann. Dabei kann aus Sicherheitsgründen zum Zwecke der Redundanz der zweite Bremskreis mit den gleichen Sensoren, beispielsweise zur Messung des Bremsdrucks, bestückt sein, wie der erste Bremskreis, um etwa bei Ausfall des ersten Kreises auf den zweiten Bremskreis zurückgreifen zu können.

In einer weiteren vorteilhaften Ausführungsform ist ein dritter Sensor zur Ermittlung einer Bremszustandsgröße F_{F}, die dem vom Fahrer über das Eingabemittel eingegebenen Bremswunsch entspricht, vorgesehen. Die Bremszustandsgröße F_{F} lässt sich dann als Systemeingangsgröße verwenden, um auf deren Basis die durch die elektrische Stelleinrichtung zu erzeugende Unterstützungskraft zu bestimmen. Ist das Eingabemittel zum Beispiel ein Bremspedal, so lässt sich als Bremszustandsgröße F_{F} beispielsweise der Pedalweg oder die vom Fahrer ausgeübte Pedalkraft messen. Dabei ist der dritte Sensor bevorzugt in halbredundanter oder vollredundanter Ausführungsform ausgebildet, damit auch für den Fall einer Fremdbremsung der Bremswunsch des Fahrers eindeutig erfasst werden kann. Wenn das ein Wegsensor wäre, dann könnte er direkt mit dem Motorwinkel korreliert werden, da beide bei einer Bremsung den gleichen Weg anzeigen (s = αₘₒₗ/i_{spindel}).

In einer weiteren bevorzugten Ausführungsform ist der dritte Sensor als Kraftsensor ausgebildet. Dies ist insbesondere gegenüber einer Messung des Stellwegs des Eingabemittels von Vorteil, da aufgrund der durchgehend mechanischen Verbindung zwischen Eingabemittel und Bremszylinder im Falle einer Fremdbremsung das Eingabemittel ebenfalls mitnehmend betätigt wird, weswegen dann Fahrerwunsch und Fremdbremswunsch überlagert sind und auf der Basis des Stellwegsignals nicht mehr voneinander separierbar sind. Demgegenüber kann ein im unmittelbaren Wirkbereich des Eingabemittels angebrachter Kraftsensor den Bremswunsch des Fahrers auch in diesem Falle noch zufrieden stellend erfassen. Der Einbauort des Kraftsensors befindet sich dabei bevorzugt an einer Eingangsstange zwischen Eingabemittel und Bremszylinder. Es ist jedoch des Weiteren auch denkbar, dass der Montageort des Kraftsensors am Eingabemittel selbst oder in dessen unmittelbaren mechanischen Wirkbereich, beispielsweise auf einer Pedaltrittplatte, an einem Pedalhebelarm, an einem Pedallager oder an einem Verbindungselement zwischen einem Pedalhebelarm und einer Eingangsstange, liegt.

In einer weiteren vorteilhaften Ausführungsform ist aus der Bremszustandsgröße F_{F} eine Bremszustandsgröße F2 als Sollwert für die aufzubringende Bremskraft ermittelbar und die Differenz (F2-F1) zu der Bremszustandsgröße F1 ist über die elektrische Stelleinrichtung ausregelbar. Auf diese Weise ist in einfacher und kostengünstiger Weise eine Bremskraftregelung mit hoher Regelqualität durchführbar. Dabei wird als Bremszustandsgröße F_{F} mittels des dritten Sensors bevorzugt die Fußkraft des Fahrers gemessen. Diese wird dann bevorzugt mit einem gegebenenfalls variablen Verstärkungsfaktor k bzw. k(v) multipliziert. Die Summe aus der Bremszustandsgröße F_{F}, d.h. beispielsweise der Fahrerfußkraft, und einer Verstärkungskraft F_{V} ist der Regelungssollwert F2. Ist-Wert ist die Bremszustandsgröße F1, die mit Hilfe des Rechenmittels aus der absoluten Betriebsposition der elektrischen Stelleinrichtung abgeleitet wurde, welche vorangehend aus dem quantitativen und dem qualitativen Signal des ersten bzw. zweiten Sensors ermittelt wurde. Aus dem "Ist-Wert, d.h. der Bremszustandsgröße F1, und dem Sollwert, d.h. der Bremszustandsgröße F2, kann die Regeldifferenz (F2-F1) bestimmt werden. Die Leistung der elektrischen Stelleinrichtung ist dann über einen Regler gemäß der Regeldifferenz regelbar, um die Differenz (F2-F1) auszugleichen. Es ist jedoch durchaus auch denkbar, dass das beschriebene erfindungsgemäße Vorgehen auch für den Fall einer autonomen Bremsung (Fremdbremsung), d.h. ohne Eingabe eines Bremswunsches durch einen Fahrer zur Anwendung kommen kann. Dann ist der Regelungssollwert für die aufzubringende Bremskraft, d.h. die Bremszustandsgröße F2, auch ohne das Vorliegen einer Bremszustandgröße F_{F}, d.h. eines Fahrerbremswunsches, beispielsweise unmittelbar von einem Steuergerät ermittelbar und dem Regler vorgebbar, um die Regeldifferenz (F2-F1) auszugleichen. Die Ermittlung des Ist-Werts des Bremsvorgangs, d.h. der Bremszustandsgröße F1, mit Hilfe des quantitativen sowie des qualitativen Signals bleibt hiervon unberührt.

In einer weiteren vorteilhaften Ausführungsform ist mindestens eine ermittelte Bremszustandsgröße (F_{F}, F1, F2) mit Hilfe des Rechenmittels in mindestens ein Bremszustandssignal umwandelbar, welches systemübergreifend bereitstellbar ist. Die Information über den Ist-Zustand des Bremsvorgangs bzw. den vom Fahrer vorgegebenen Bremswunsch besitzt gegebenenfalls nicht nur für die Funktionalität der Vorrichtung zur elektromechanischen Bremsunterstützung Bedeutung, sondern kann auch in anderen Teilsystemen eines Fahrzeugs nutzbar gemacht werden, beispielsweise in Systemen zur Regulierung der Fahrzeugstabilität, Fahrwerksmanagementsystemen oder Bremsassistenzsystemen. Hierfür kann das von dem Rechenmittel generierte Bremszustandssignal beispielsweise über ein Bussystem den anderen Fahrzeugteilsystemen zur Weiterbenutzung zur Verfügung gestellt werden, ohne dass hierfür separate Sensoren notwendig sind.

In einer weiteren vorteilhaften Ausführungsform ist die durch die elektrische Stelleinrichtung aufgebrachte Unterstützungskraft mindestens über eine Spindelschraube in das Bremssystem einleitbar. Dabei ist die Spindelschraube bevorzugt als Kugelumlaufspindel ausgebildet und die elektrische Stelleinrichtung ist bevorzugt koaxial und konzentrisch zur Spindel angeordnet. Dies bietet den Vorteil einer spielfreien Kraftübertragung bei geringer Einbaugröße, da insbesondere auf ein Zwischengetriebe verzichtet werden kann. Die Unterstützungskraft wird dabei von der Spindel bevorzugt über eine Mitnehmerkonstruktion in das Bremssystem eingebracht, bei welcher von der Spindel keine Zugkräfte übertragen werden. Das bedeutet, die Spindel wirkt nur in eine Richtung auf den Bremszylinder, nämlich in derjenigen Richtung, in der der Bremszylinder zur Einleitung des Bremsvorgangs betätigbar ist, indem sie auf einen Mitnehmer drückt. In der anderen Betätigungsrichtung des Bremszylinders, die zur Lösung der Bremsen vorgesehen ist, hat die Spindel bevorzugt keine Wirkung auf den Bremszylinder, da dann der Mitnehmer von der Spindel abhebt und somit die antreibende Verbindung zwischen Bremszylinder und der elektrischen Stelleinrichtung unterbrochen wird.

In einer weiteren vorteilhaften Ausführungsform ist das mindestens eine Rechenmittel als Bestandteil eines Systems zur Regulierung der Fahrzeugstabilität ausgebildet. Bekannte Systeme zur Regulierung der Fahrzeugstabilität sowie Fahrwerkmanagementsysteme setzen üblicherweise Steuergeräte ein, die ohne großen Aufwand auch zur Ansteuerung der Vorrichtung zur elektromechanischen Bremsunterstützung Verwendung finden können. Zwar ist durchaus vorstellbar, dass die Ansteuerung der Vorrichtung zur elektromechanischen Bremsunterstützung in einem eigenen, bevorzugt modular ausgebildeten Steuergerät erfolgt, jedoch werden die notwendigen Berechnungen zur Ansteuerung der elektrischen Stelleinrichtung bevorzugt von einem der Prozessoren des Steuergeräts eines Systems zur Regulierung der Fahrzeugstabilität vorgenommen.

Die Erfindung wird nachfolgend anhand eines bevorzugten Ausführungsbeispiels näher erläutert. In den zugehörigen Zeichnungen zeigen
Fig. 1 eine schematische Längsschnittdarstellung einer erfindungsgemäßen Vorrichtung zur elektromechanischen Bremsunterstützung von Fahrzeugen,
Fig. 2 eine schematische Darstellung der Regelung der elektrischen Stelleinrichtung einer erfindungsgemäßen Vorrichtung zur elektromechanischen Bremsunterstützung von Fahrzeugen und
Fig. 3 ein Diagramm einer beispielhaft ausgewählten Abhängigkeit zwischen einem möglichen quantitativen Signal eines ersten Sensors und einem möglichen qualitativen Signal eines zweiten Sensors.

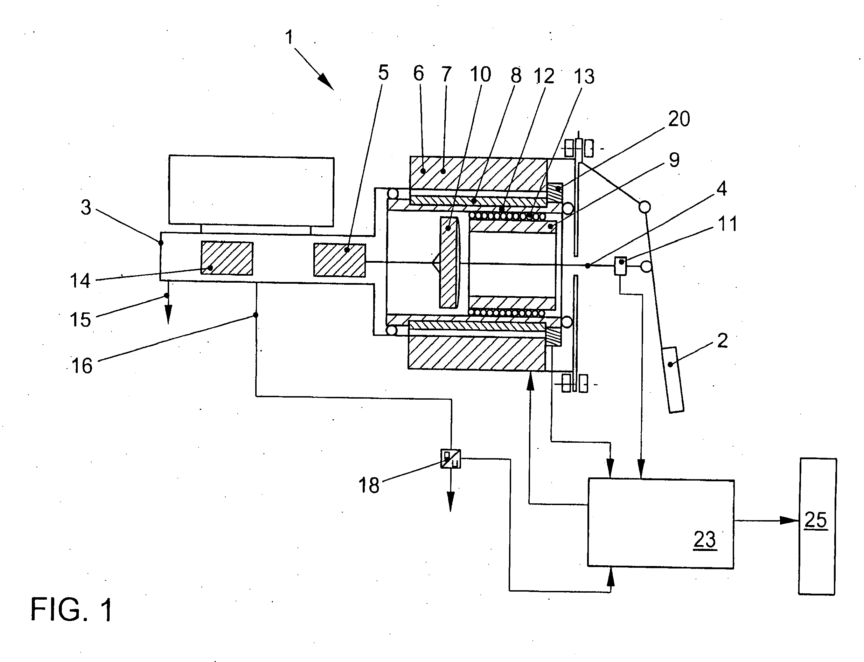

Fig. 1 zeigt schematisch eine Längsschnittansicht einer erfindungsgemäßen Vorrichtung zur elektromechanischen Bremsunterstützung von Fahrzeugen. Dabei ist ein Bremskraftverstärker 1 dargestellt, der eine durchgängige Kolbenstange 4 zur direkten Verbindung eines als Bremspedal 2 ausgebildeten Eingabemittels mit einem Primärkolben 5 eines als Tandem-Hauptbremszylinder ausgebildeten Hauptbremszylinders 3 aufweist.

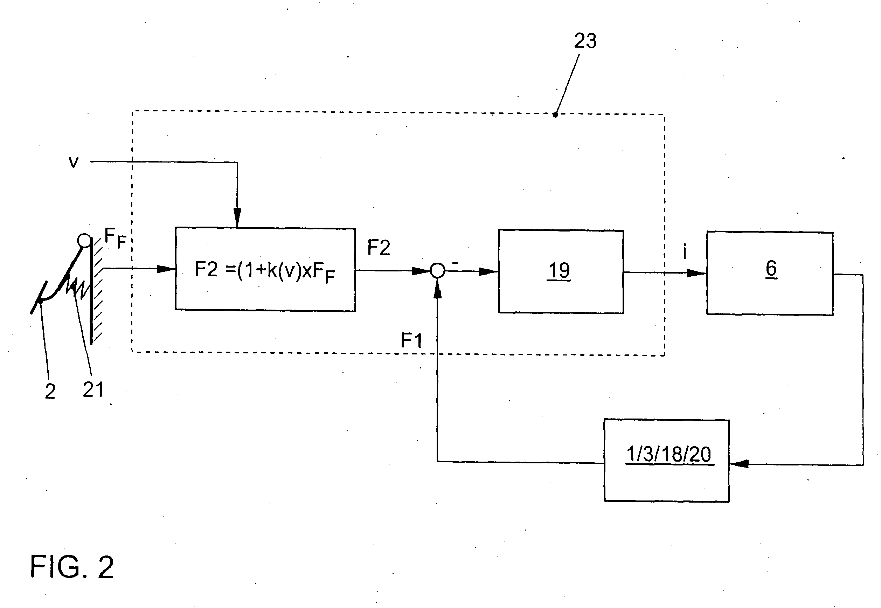

Des Weiteren weist der elektromechanische Bremskraftverstärker 1 einen als bürstenlosen Gleichstrommotor ausgebildeten Servomotor 6 mit einem Stator 7 und einem Rotor 8 auf, die jeweils in der Art einer Hülse konzentrisch um die Kolbenstange 4 angeordnet sind. Dabei weist der Rotor 8 mindestens einen Permanentmagneten und der Stator 7 mindestens eine bestrombare Spule auf. Zur Übertragung der als Unterstützungskraft dienenden Antriebskraft des Servomotors 6 auf die Kolbenstange 4 dient eine als so genanntes "Rot-Trans-Getriebe" ausgebildete Getriebeeinheit zur Umwandlung eines Drehmoments in eine translatorische Kraft, die axial auf die Kolbenstange 4 wirkt. Die Getriebeeinheit kann dabei beispielsweise als Kugelumlaufspindel oder als Rollen-Gewindetrieb ausgebildet sein. Auf ein Zwischengetriebe wird dabei verzichtet. Vielmehr treibt der Servomotor 6 das Rot-Trans-Getriebe direkt an. Dessen koaxial zu der Kolbenstange 4 angeordneter Spindeltrieb umfasst eine drehfest gelagerte, jedoch axial bewegliche Spindelschraube 9, welche über den Rotor 8 des Servomotors 6 antreibbar ist. Bei Aktivierung des Servomotors 6 zur Bremskraftverstärkung läuft die Spindelschraube 9 gegen einen Mitnehmer 10 an. Der Mitnehmer 10 ist dabei kalottenförmig oder konvex ausgebildet. Im Verstärkerbetrieb drückt die Spindelschraube 9 auf den unmittelbar an der Kolbenstange 4 vorgesehenen Mitnehmer 10 und damit die Kolbenstange 4 und das Bremspedal 2 in Richtung des Hauptbremszylinders 3, d.h. in Figur 1 nach links. Dazu wird die vom Fahrer aufgebrachte Pedalkraft mit einem Kraftsensor 11 an der Kolbenstange 4 gemessen. Des Weiteren ist ein als Steuergerät 23 ausgebildetes Rechenmittel vorgesehen, wobei in dem Steuergerät 23 eine Unterstützungskraft ermittelbar ist, welche durch den Servomotor 6 aufbringbar ist. In Abhängigkeit der vom Kraftsensor 11 erfassten Kraft bzw. einer vom Steuergerät 23 ermittelten Regeldifferenz werden die Spulen des Stators 7 des Servomotors 6 bestromt. Infolgedessen beginnt der Rotor 8, der hier mit Permanentmagneten versehen ist, zu rotieren. Über eine mit dem Rotor 8 fest verbundene oder auch einstückig ausgebildete Außenhülse 12 und Kugeln 13 des Kugelspindeltriebs bewegt sich die Spindelschraube 9 in einer Translationsbewegung in Richtung auf den Tandem-Hauptbremszylinder 3 zu. Die Spindelschraube 9 ist dazu rotationsfest, jedoch translationsfrei gegenüber dem Aufbau gelagert. Dabei ist insbesondere die rotationsfeste Lagerung der Spindelschraube 9 funktionswesentlich, d.h. die Spindelschraube 9 ist gegen Verdrehen gesichert. Sobald die Spindelschraube 9 den innerhalb der Außenhülse 12 auf der Kolbenstange 4 angeordneten Mitnehmer 10 berührt, drückt sie diesen zusammen mit der vom Fahrer ausgeübten Fußkraft der Kolbenstange 4 in Richtung des Primärkolbens 5. Ein Sekundärkolben 14 überträgt in bekannter Weise den Druck vom Primärkreis in den Sekundärkreis des Bremssystems. Der verwendete Spindeltrieb ist dabei selbsthemmungsfrei. Bei einem Ausfall des Servomotors 6 kann hierdurch eine Rückstellung des Bremspedals 2 erfolgen. Dazu kann eine eigene Rückstellfeder vorgesehen sein, welche die Spindelschraube 9 in ihre Ausgangsposition zurückdrückt. Bevorzugt wird jedoch die Rückstellkraft für den Spindeltrieb allein durch den hydraulischen Gegendruck des Hauptbremszylinders 3 und eine Pedalrückholfeder 21 (s. Fig. 2) erzeugt, wodurch der Aufbau des Bremskraftverstärkers 1 einfach bleibt. Sollte der elektromechanische Bremskraftverstärker 1 nicht arbeiten oder stromlos werden, kann der Fahrer mit seinem Fuß die Bremse allein betätigen. Da der Mitnehmer 10 lediglich Druckkräfte überträgt, stört der elektromechanische Bremskraftverstärker 1 hierbei nicht.

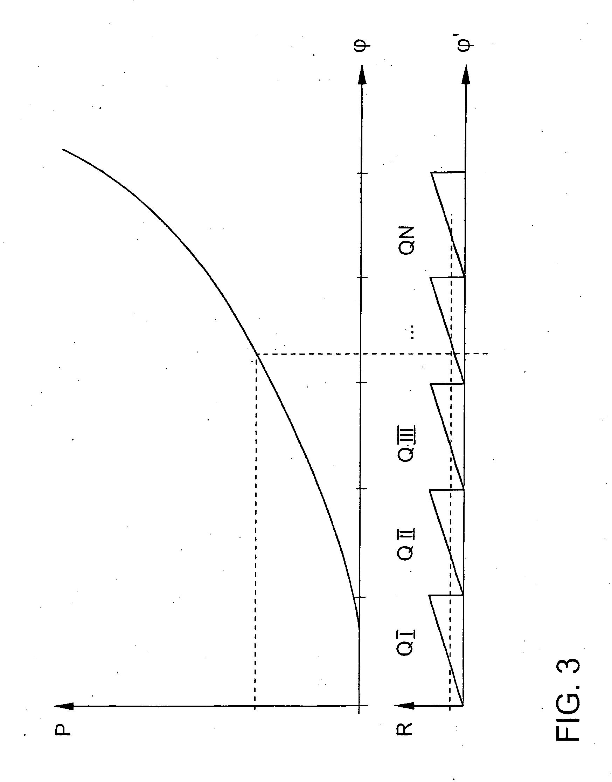

Des Weiteren weist der elektrisch kommutierbare Servomotor 6 einen als Resolver 20 ausgebildeten ersten Sensor auf, welcher zur Erleichterung der Kommutierung ein Signal R (s. Fig. 3) mit der Information über die Winkelstellung des Rotors 8 des Servomotors 6 generiert und an das Steuergerät 23 übermittelt. Der Resolver 20 als Drehwinkelsensor dient demnach zur Erzeugung eines quantitativen Signals R (s. Fig. 3) bezüglich der relativen Betriebsposition des Servomotors 6. Am Ausgang des ersten Bremskreises 16 ist zudem ein als Drucksensor 18 ausgebildeter zweiter Sensor angeordnet, der den im Hauptbremszylinder 3 vom Primärkolben 5 erzeugten Druck ermittelt und ein entsprechendes Signal p an das Steuergerät 23 übermittelt. Der Drucksensor 18 dient dabei gleichzeitig auch zur Erzeugung eines qualitativen Signals bezüglich der ungefähren Betriebsposition des Servomotors 6. Mit Hilfe des Steuergeräts 23 ist aus dem quantitativen und dem qualitativen Signal die absolute Winkelposition des Servomotors 6 ermittelbar. Zudem ist die Kennlinie bekannt, die den Zusammenhang zwischen dem an den Fahrzeugrädern (nicht dargestellt) anliegenden Bremsdruck und der jeweiligen zugeordneten absoluten Winkelposition des Servomotors 6 beschreibt. Somit kann vom Steuergerät 23 aus dieser Kennlinie der momentan vorliegende Ist-Zustand des Bremsvorgangs in Form einer Bremszustandsgröße F1, welcher für die Regelung der Bremskraftverstärkung möglichst exakt bekannt sein muss, ermittelt werden, ohne eine Druckmessung direkt an den Fahrzeugrädern vorzunehmen. Es ist auch vorstellbar, dass aus Sicherheitsgründen jeder der beiden Bremskreise aus Redundanzgründen an seinem jeweiligen Ausgang 15, 16 mit einem eigenen Drucksensor ausgestattet ist (hier nicht dargestellt), um etwa bei Ausfall des ersten Kreises auf den zweiten Bremskreis zurückgreifen zu können.

Fig. 2 zeigt schematisch die Regelung des Servomotors 6 des elektromechanischen Bremskraftverstärkers 1 mit Hilfe des Steuergeräts 23. Der an den Fahrzeugrädern (nicht dargestellt) anliegende Bremsdruck korreliert - zumindest im stationären Zustand - mit der Betriebsposition des Servomotors 6, d.h. mit der absoluten Winkelposition des Rotors 8 (s. Fig. 1). Zur Bestimmung der durch den Servomotor 6 erzeugten Verstärkung wird als Systemeingangsgröße zunächst die Information benötigt, wie stark der Fahrer ohne Hilfe der Verstärkung bremsen möchte. Hierzu kann im Prinzip der Pedalweg oder die Pedalkraft des Bremspedals 2 gemessen werden. Bevorzugt wird man die Pedalkraft auswählen, weil durch die feste Verbindung des Bremspedals 2 mit der Kolbenstange 4 der Pedalweg immer die Verschiebung aus Fußkraft und Verstärkerkraft repräsentieren würde. Dazu ist an der Kolbenstange 4 ein Kraftsensor 11 zur Ermittlung einer Bremszustandsgröße F_{F}, die dem vom Fahrer über das Bremspedal 2 eingegebenen Bremswunsch entspricht; vorgesehen. Dabei wird als Bremszustandsgröße F_{F} mittels des Kraftsensors 11 die Fußkraft des Fahrers gemessen. Die Bremszustandsgröße F_{F} lässt sich dann als Systemeingangsgröße verwenden, um auf deren Basis die durch den Servomotor 6 zu erzeugende Unterstützungskraft zu bestimmen. Aus der Bremszustandsgröße F_{F} ist dann eine Bremszustandsgröße F2 als Sollwert für die aufzubringende Bremskraft ermittelbar. Dazu wird zur Ermittlung einer Verstärkungskraft F_{V} die Bremszustandsgröße F_{F} mit einem gegebenenfalls variablen Verstärkungsfaktor k bzw. k(v) multipliziert. Ob die Bremskraftverstärkung k konstant oder variabel ist, hängt von der jeweiligen Ausführungsform des Steuergeräts 23 ab. So kann beispielsweise in Abhängigkeit der Fahrgeschwindigkeit v bei hohen Fahrgeschwindigkeiten eine hohe Verstärkung k(v) eingestellt werden. Die Summe aus der Bremszustandsgröße F_{F}, d.h. der Fahrerfußkraft, und der Verstärkungskraft F_{V} ergibt dann den Regelungssollwert F2. Ist-Wert für die Regelung des Servomotors 6 ist die Bremszustandsgröße F1, die mit Hilfe des Steuergeräts 23 aus der absoluten Winkelposition des Servomotors 6 abgeleitet wurde, welche vorangehend aus dem quantitativen Resolversignal R und dem qualitativen Drucksignal p des Resolvers 20 bzw. des Drucksensors 18 ermittelt wurde. Aus dem Ist-Wert, d.h. der Bremszustandsgröße F1, und dem Sollwert, d.h. der Bremszustandsgröße F2, kann dann die Regeldifferenz (F2-F1) bestimmt werden und die Differenz (F2-F1) des Sollwerts F2 zu der Bremszustandsgröße F1 ist dann über einen Regler 19 durch Bestromung des Servomotors 6 ausregelbar. Die Leistung des Servomotors 6 ist dabei über den Regler 19 durch unterschiedliche Bestromung mit einem Strom i gemäß der Regeldifferenz regelbar, um die Differenz (F2-F1) auszugleichen. Zudem sind die ermittelten Bremszustandsgrößen F_{F}, F1, F2 mit Hilfe des Steuergeräts 23 in Bremszustandssignale umwandelbar, welche systemübergreifend bereitstellbar sind. Dabei können die vom Steuergerät 23 generierten Bremszustandssignale über ein Bussystem 25 (s. Fig. 1) anderen Fahrzeugteilsystemen zur Weiterbenutzung zur Verfügung gestellt werden.

Fig. 3 zeigt schematisch ein Diagramm einer möglichen Abhängigkeit zwischen dem quantitativen Signal R des Resolvers 20 und dem qualitativen Signal p des Drucksensors 18 (s. Fig. 1). Dabei ist entlang der Horizontalachse die jeweilige zugehörige Betriebsposition des Servomotors 6 aufgetragen. Unter der Betriebsposition wird in diesem Falle die Winkeistellung φ des Rotors 8 des Servomotors 6 (s. Fig. 1) verstanden. Da diese jedoch nicht über den gesamten Betriebsbereich des Servomotors 6 mit Hilfe eines einzigen Sensors in ausreichender Auflösung dargestellt werden kann, sind hierzu zwei Sensoren notwendig, im vorliegenden Fall der Resolver 20 und der Drucksensor 18. Dabei liefert der Resolver 20 ein quantitatives Signal R, welches eine vergleichsweise hohe Auflösung bietet, dies jedoch lediglich bezüglich einer relativen Winkelposition des Servomotors 6. Die Information, die ein Drehwinkelsensor, wie der Resolver 20, bezüglich der Winkelposition des Rotors 8 liefert, ist selbst bei hoher Auflösung nämlich stets lediglich relativ, da ein einzelner Drehwinkelsensor naturgemäß keinen Absolutwinkel größer als 360° darstellen kann. Spätestens nach einer Umdrehung des Rotors 8 wird demnach der Messwert vieldeutig. D.h. das Signal R ist nur bereichsweise eindeutig und kehrt als Drehwinkel φ' des Rotors 6 innerhalb der unterschiedlichen Umdrehungsbereiche bzw. Quadranten QI, QII, QIII, ..., QN des Servomotors 6 periodisch wieder. Die jeweiligen Quadranten QI, QII, QIII, ..., QN, d.h. die Umdrehungen oder Teilumdrehungen des Servomotors 6, können dabei auch als Winkelklassen aufgefasst werden, innerhalb derer das quantitative Signal R des Drehwinkelsensors jeweils eindeutig ist. Abhängig von der Polzahl des Servomotors 6 ist das quantitative Signal R auch nur innerhalb eines noch geringeren Teilbereichs eindeutig, liefert also nur für einen bestimmten Teilbereich einer Umdrehung eine für sich aussagekräftige Winkelauflösung, weswegen für die Bestimmung der absoluten Winkelposition eine zusätzliche Klassifizierung des quantitativen Signals R notwendig ist. Zu diesem Zweck ist ein Drucksensor 18 (s. Fig. 1) zur Auswertung des Drucks im Hauptbremszylinder 3 vorgesehen, wobei dem jeweils ermittelten Druckbereich eine ungefähre Winkelposition φ des Servomotors 6 eindeutig zuordenbar ist. Da das quantitative Resolversignal R zur Bestimmung der relativen Winkelposition des Servomotors 6 lediglich mehrdeutig vorliegt, kann so in einfacher Weise der Druckbereich des Hauptbremszylinders 3 in Form eines qualitativen Drucksignals p als Zuordnungsgröße herangezogen werden, um das quantitative Resolversignal R einer absoluten Winkelposition des Servomotors 6 zuzuordnen. Zwar ist die Abhängigkeit zwischen der absoluten Winkelposition des Servomotors 6 und dem Druck im Hauptbremszylinder 3 nicht immer konstant und von mehreren Parametern abhängig, wie beispielsweise Scheibenschlag, Temperatur oder Betätigungsgeschwindigkeit, weswegen der Bremsdruck selbst nur einen Grobmesswert p zur Bestimmung der absoluten Winkelposition des Servomotors 6 liefert. Der Druck im Hauptbremszylinder 3 und das zugehörige Drucksignal p sind demnach als einzige verwendete Messgröße nur wenig tauglich. Es besteht jedoch dennoch ein grundsätzlich bekannter Zusammenhang zwischen dem Weg des Primärkolbens 5 (d.h. dem Winkel des Servomotors 6) und dem vorliegenden Bremsdruck. Da im dargestellten Fall der gesamte Betriebsdruckbereich von 0-150 bar mit etwa fünf Umdrehungen des Servomotors 6 durchschritten wird, ist auf diese Weise eine Klassifizierung des quantitativen Resolversignals R anhand des jeweiligen Drucksignals p sehr gut möglich. So kann z.B. jedem Drucksignal p zumindest eine Winkelklasse, d.h. ein bestimmter Quadrant Ql, QII, QIII, ..., QN des Servomotors 6, in dessen Bereich das quantitative Signal R des Drehwinkelsensors jeweils eindeutig ist, zugeordnet werden. Der Drucksensor 18 liefert also ein qualitatives Signal p, welches zwar über den gesamten Betriebsbereich des Servomotors 6 eindeutig ist, jedoch nur eine vergleichsweise grobe Auflösung bezüglich der absoluten Winkelposition des Rotors 8 bietet. Dadurch, dass dem ermittelten Drucksignal p jedoch eine Winkelklasse (z.B. der Quadrant QIV) eindeutig zugeordnet wird, kann dann mit deren Hilfe aus dem quantitativen Resolversignal R die momentane absolute Betriebsposition des Servomotors 6 ermittelt werden. Dazu wird beispielsweise die Anzahl der bereits vollständig durchschrittenen Winkelklassen (z.B. 3) mit dem Winkel einer vollständigen Rotor(teil)umdrehung multipliziert und zu dem mittels des quantitativen Resolversignals R ermittelten relativen Drehwinkel φ' addiert. Aus der Kombination beider Signale R und p, die jeweils für sich allein genommen keine zufrieden stellende Aussage über die momentane Winkelposition des Rotors 8 des Servomotors 6 zulassen, kann dann also diesbezüglich in Kenntnis der gegenseitigen Abhängigkeit der beiden Signale eine genaue und eindeutige Aussage getroffen werden.

### Bezugszeichenliste

- 1: Elektromechanischer Bremskraftverstärker
- 2: Bremspedal
- 3 .: Hauptbremszylinder
- 4: Kolbenstange
- 5: Primärkolben
- 6: Servomotor
- 7: Stator
- 8: Rotor
- 9: Spindelschraube
- 10: Mitnehmer
- 11: Kraftsensor
- 12: Außerhülse
- 13: Kugel
- 14: Sekundärkolben
- 15: Ausgang des ersten Bremskreises
- 16: Ausgang des zweiten Bremskreises
- 18: Drucksensor
- 19: Regler
- 20: Resolver
- 21: Pedalrückholfeder
- 23: Steuergerät
- 25: Bussystem
- F_{F}: Bremszustandsgröße (Fußkraft)
- F1: Ist-Bremszustandsgröße
- F2: Soll-Bremszustandsgröße
- i: Strom
- k: Verstärkungsfaktor
- k(v): Verstärkungsfaktor (fahrgeschwindigkeitsabhängig)
- v: Fahrgeschwindigkeit
- p: Drucksignal
- φ, φ': Absoluter Motorwinkel
- R: Resolversignal
- Q1...QN: Quadranten

## Patentansprüche

1. Vorrichtung zur elektromechanischen Bremsunterstützung von Fahrzeugen
- umfassend ein durch einen Fahrer beeinflussbares Eingabemittel (2), das mit mindestens einem Bremszylinder antreibend verbunden ist, sowie
- eine elektrische Stelleinrichtung (6), die zur Betätigung des mindestens einen Bremszylinders in mindestens einer Richtung vorgesehen ist,
- wobei in mindestens einem Rechenmittel (23) eine Unterstützungskraft ermittelbar ist,
- die Unterstützungskraft durch die elektrische Stelleinrichtung aufbringbar ist,
- ein erster Sensor (20) zur Erzeugung eines quantitativen Signals bezüglich der relativen Betriebsposition der elektrischen Stelleinrichtung vorgesehen ist, **dadurch gekennzeichnet, dass**
- ein zweiter Sensor (18) zur Erzeugung eines qualitativen Signals bezüglich der ungefähren Betriebsposition der elektrischen Stelleinrichtung vorgesehen ist und
- mit Hilfe des Rechenmittels aus dem quantitativen und dem qualitativen Signal die momentane absolute Betriebsposition der elektrischen Stelleinrichtung ermittelbar und daraus eine Bremszustandsgröße F1 ableitbar ist, die einem Ist-Zustand eines Bremsvorgangs entspricht.

2. Vorrichtung nach Anspruch 1, **dadurch gekennzeichnet, dass** die elektrische Stelleinrichtung als Servomotor (6) ausgebildet ist.

3. Vorrichtung nach Anspruch 2, **dadurch gekennzeichnet, dass** der Servomotor (6) als bürstenloser Gleichstrommotor ausgebildet ist.

4. Vorrichtung nach einem der Ansprüche 2 oder 3, **dadurch gekennzeichnet, dass** der erste Sensor als Drehwinkelsensor (20) ausgebildet ist, durch den die relative Position des Rotors (8) des Servomotors (6) ermittelbar ist.

5. Vorrichtung nach einem der genannten Ansprüche, **dadurch gekennzeichnet, dass** der zweite Sensor als Drucksensor (18) zur Auswertung des Drucks in dem mindestens einen Bremszylinder vorgesehen ist, wobei einem ermittelten Druckbereich eine ungefähre Betriebsposition der elektrischen Stelleinrichtung eindeutig zuordenbar ist.

6. Vorrichtung nach Anspruch 5, **dadurch gekennzeichnet, dass** dem ermittelten Druckbereich eine Winkelklasse eindeutig zuordenbar ist, mit deren Hilfe aus dem quantitativen Signal die momentane absolute Betriebsposition der elektrischen Stelleinrichtung ermittelbar ist.

7. Vorrichtung nach einem der genannten Ansprüche, **dadurch gekennzeichnet, dass** der mindestens eine Bremszylinder als Hauptbremszylinder (3) der Bremsanlage eines Fahrzeugs ausgebildet ist.

8. Vorrichtung nach einem der genannten Ansprüche, **dadurch gekennzeichnet, dass** ein dritter Sensor zur Ermittlung einer Bremszustandsgröße F_{F}, die dem vom Fahrer über das Eingabemittel eingegebenen Bremswunsch entspricht, vorgesehen ist.

9. Vorrichtung nach Anspruch 8, **dadurch gekennzeichnet, dass** der dritte Sensor als Kraftsensor (11) ausgebildet ist.

10. Vorrichtung nach Anspruch 8 oder 9, **dadurch gekennzeichnet, dass** aus der Bremszustandsgröße F_{F} eine Bremszustandsgröße F2 als Sollwert für die aufzubringende Bremskraft ermittelbar ist und die Differenz (F2-F1) zu der Bremszustandsgröße F1 über die elektrische Stelleinrichtung ausregelbar ist.

11. Vorrichtung nach einem der genannten Ansprüche, **dadurch gekennzeichnet, dass** mindestens eine ermittelte Bremszustandsgröße (F_{F}, F1, F2) mit Hilfe des Rechenmittels in mindestens ein Bremszustandssignal umwandelbar ist, welches systemübergreifend bereitstellbar ist.

12. Vorrichtung nach einem der genannten Ansprüche, **dadurch gekennzeichnet, dass** die durch die elektrische Stelleinrichtung aufgebrachte Unterstützungskraft mindestens über eine Spindelschraube (9) in das Bremssystem einleitbar ist.

13. Vorrichtung nach einem der genannten Ansprüche, **dadurch gekennzeichnet, dass** das mindestens eine Rechenmittel als Bestandteil eines Systems zur Regulierung der Fahrzeugstabilität ausgebildet ist.

14. Verfahren zur elektromechanischen Bremsunterstützung von Fahrzeugen,
- umfassend ein durch einen Fahrer beeinflussbares Eingabemittel (2), das mit mindestens einem Bremszylinder antreibend verbunden ist, sowie
- eine elektrische Stelleinrichtung (6), die zur Betätigung des mindestens einen Bremszylinders in mindestens einer Richtung vorgesehen ist,
- wobei in mindestens einem Rechenmittel (23) eine Unterstützungskraft ermittelt wird,
- die Unterstützungskraft durch die elektrische Stelleinrichtung aufgebracht wird,
- ein erster Sensor (20) zur Erzeugung eines quantitativen Signals bezüglich der relativen Betriebsposition der elektrischen Stelleinrichtung vorgesehen ist, **dadurch gekennzeichnet, dass**
- ein zweiter Sensor (18) zur Erzeugung eines qualitativen Signals bezüglich der ungefähren Betriebsposition der elektrischen Stelleinrichtung vorgesehen ist und
- mit Hilfe des Rechenmittels aus dem quantitativen und dem qualitativen Signal die momentane absolute Betriebsposition der elektrischen Stelleinrichtung ermittelt wird und daraus eine Bremszustandsgröße F1 abgeleitet wird, die einem Ist-Zustand eines Bremsvorgangs entspricht.

15. Verfahren nach Anspruch 14, **dadurch gekennzeichnet, dass** die elektrische Stelleinrichtung als Servomotor (6) ausgebildet ist.

16. Verfahren nach Anspruch 15, **dadurch gekennzeichnet, dass** der Servomotor (6) als bürstenloser Gleichstrommotor ausgebildet ist

17. Verfahren nach Anspruch 15 oder 16, **dadurch gekennzeichnet, dass** der erste Sensor als Drehwinkelsensor (20) ausgebildet ist, durch den die relative Position des Rotors (8) des Servomotors (6) ermittelt wird.

18. Verfahren nach einem der Ansprüche 14 bis 17, **dadurch gekennzeichnet, dass** der zweite Sensor als Drucksensor (18) zur Auswertung des Drucks in dem mindestens einen Bremszylinder vorgesehen ist, wobei einem ermittelten Druckbereich eine ungefähre Betriebsposition der elektrischen Stelleinrichtung eindeutig zugeordnet wird.

19. Verfahren nach Anspruch 18, **dadurch gekennzeichnet, dass** dem ermittelten Druckbereich eine Winkelklasse eindeutig zugeordnet wird, mit deren Hilfe aus dem quantitativen Signal die momentane absolute Betriebsposition der elektrischen Stelleinrichtung ermittelt wird.

20. Verfahren nach einem der Ansprüche 14 bis 19, **dadurch gekennzeichnet, dass** der mindestens eine Bremszylinder als Hauptbremszylinder (3) der Bremsanlage eines Fahrzeugs ausgebildet ist.

21. Verfahren nach einem der Ansprüche 14 bis 20, **dadurch gekennzeichnet, dass** ein dritter Sensor zur Ermittlung einer Bremszustandsgröße F_{F}, die dem vom Fahrer über das Eingabemittel eingegebenen Bremswunsch entspricht, vorgesehen ist.

22. Verfahren nach Anspruch 21, **dadurch gekennzeichnet, dass** der dritte Sensor als Kraftsensor (11) ausgebildet ist.

23. Verfahren nach Anspruch 21 oder 22, **dadurch gekennzeichnet, dass** aus der Bremszustandsgröße F_{F} eine Bremszustandsgröße F2 als Sollwert für die aufzubringende Bremskraft ermittelt wird und die Differenz (F2-F1) zu der Bremszustandsgröße F1 über die elektrische Stelleinrichtung ausgeregelt wird.

24. Verfahren nach einem der Ansprüche 14 bis 23, **dadurch gekennzeichnet, dass** mindestens eine ermittelte Bremszustandsgröße (F_{F}, F1, F2) mit Hilfe des Rechenmittels in mindestens ein Bremszustandssignal umgewandelt wird, welches systemübergreifend bereitgestellt wird.

25. Verfahren nach einem der Ansprüche 14 bis 24, **dadurch gekennzeichnet, dass** die durch die elektrische Stelleinrichtung aufgebrachte Unterstützungskraft mindestens über eine Spindelschraube (9) in das Bremssystem eingeleitet wird.

26. Verfahren nach einem der Ansprüche 14 bis 25, **dadurch gekennzeichnet, dass** das mindestens eine Rechenmittel als Bestandteil eines Systems zur Regulierung der Fahrzeugstabilität ausgebildet ist

## Claims

1. Apparatus for electromechanical brake assistance of vehicles,
- comprising an input means (2) which can be influenced by a driver and which is drivingly connected to at least one brake cylinder, and
- an electrical positioning device (6) which is provided for actuating the at least one brake cylinder in at least one direction,
- an assistance force being determinable in at least one computing means (23),
- the assistance force being able to be exerted by the electrical positioning device, and
- a first sensor (20) for generating a quantitative signal regarding the relative operating position of the electrical positioning device being provided,
**characterised in that**
- a second sensor (18) for generating a qualitative signal regarding the approximate operating position of the electrical positioning device is provided, and
- the instantaneous absolute operating position of the electrical positioning device can be determined by means of the computing means from the quantitative and the qualitative signal and a braking state value F1 corresponding to an actual state of a braking process can be derived therefrom.

2. Apparatus according to Claim 1, **characterised in that** the electrical positioning device is in the form of a servo motor (6).

3. Apparatus according to Claim 2, **characterised in that** the servo motor (6) is in the form of a brushless direct-current motor.

4. Apparatus according to either of Claims 2 and 3, **characterised in that** the first sensor is in the form of a rotational angle sensor (20) by which the relative position of the rotor (8) of the servo motor (6) can be determined.

5. Apparatus according to any one of the claims mentioned, **characterised in that** the second sensor is provided as a pressure sensor (18) for evaluating the pressure in the at least one brake cylinder, an approximate operating position of the electrical positioning device being able to be allocated unambiguously to a pressure range determined.

6. Apparatus according to Claim 5, **characterised in that** an angle class, by means of which the instantaneous absolute operating position of the electrical positioning device can be determined from the quantitative signal, can be unambiguously allocated to the pressure range determined.

7. Apparatus according to any one of the claims mentioned, **characterised in that** the at least one brake cylinder is in the form of a master cylinder (3) of the brake system of a vehicle.

8. Apparatus according to any one of the claims mentioned, **characterised in that** a third sensor is provided for determining a braking state value F_{F} which corresponds to the braking wish input by the driver via the input means.

9. Apparatus according to Claim 8, **characterised in that** the third sensor is in the form of a force sensor (11).

10. Apparatus according to Claim 8 or 9, **characterised in that** a braking state value F2 can be determined from the braking state value F_{F} as the reference value for the braking force to be exerted, and the difference (F2-F1) from the braking state value F1 can be compensated via the electrical positioning device.

11. Apparatus according to any one of the claims mentioned, **characterised in that** at least one braking state value (F_{F}, F1, F2) which has been determined can be converted by means of the computing means into at least one braking state signal which can be made available in a system-transcending manner.

12. Apparatus according to any one of the claims mentioned, **characterised in that** the assistance force exerted by the electrical positioning device can be introduced into the brake system via at least one spindle screw (9).

13. Apparatus according to any one of the claims mentioned, **characterised in that** the at least one computing means is in the form of a component of a system for regulating vehicle stability.

14. Method for electromechanical brake assistance of vehicles,
- comprising an input means (2) which can be influenced by a driver and which is drivingly connected to at least one brake cylinder, and
- an electrical positioning device (6) which is provided for actuating the at least one brake cylinder in at least one direction,
- an assistance force being determinable in at least one computing means (23),
- the assistance force being able to be exerted by the electrical positioning device, and
- a first sensor (20) for generating a quantitative signal regarding the relative operating position of the electrical positioning device being provided,
**characterised in that**
- a second sensor (18) for generating a qualitative signal regarding the approximate operating position of the electrical positioning device is provided, and
- the instantaneous absolute operating position of the electrical positioning device is determined by means of the computing means from the quantitative and the qualitative signal and a braking state value F1 corresponding to an actual state of a braking process is derived therefrom.

15. Method according to Claim 14, **characterised in that** the electrical positioning device is in the form of a servo motor (6).

16. Method according to Claim 15, **characterised in that** the servo motor (6) is in the form of a brushless direct-current motor.

17. Method according to Claim 15 or 16, **characterised in that** the first sensor is in the form of a rotational angle sensor (20) by which the relative position of the rotor (8) of the servo motor (6) is determined.

18. Method according to any one of Claims 14 to 17, **characterised in that** the second sensor is provided as a pressure sensor (18) for evaluating the pressure in the at least one brake cylinder, an approximate operating position of the electrical positioning device being allocated unambiguously to a pressure range determined.

19. Method according to Claim 18, **characterised in that** an angle class, by means of which the instantaneous absolute operating position of the electrical positioning device is determined from the quantitative signal, is allocated unambiguously to the pressure range determined.

20. Method according to any one of Claims 14 to 19, **characterised in that** the at least one brake cylinder is in the form of a master cylinder (3) of the brake system of a vehicle.

21. Method according to any one of Claims 14 to 20, **characterised in that** a third sensor is provided for determining a braking state value F_{F} which corresponds to the braking wish input by the driver via the input means.

22. Method according to Claim 21, **characterised in that** the third sensor is in the form of a force sensor (11).

23. Method according to Claim 21 or 22, **characterised in that** a braking state value F2 is determined from the braking state value F_{F} as the reference value for the braking force to be exerted and the difference (F2-F1) from the braking state value F1 is compensated via the electrical positioning device.

24. Method according to any one of Claims 14 to 23, **characterised in that** at least one braking state value (F_{F}, F1, F2) which has been determined is converted by means of the computing means into at least one braking state signal which is made available in a system-transcending manner.

25. Method according to any one of Claims 14 to 24, **characterised in that** the assistance force exerted by the electrical positioning device is introduced into the brake system via at least one spindle screw (9).

26. Method according to any one of Claims 14 to 25, **characterised in that** the at least one computing means is in the form of a component of a system for regulating vehicle stability.

## Revendications

1. Dispositif d'assistance électromécanique du freinage de véhicules,
- comprenant un moyen d'entrée (2) pouvant être influencé par un conducteur et qui est relié de manière motrice avec au moins un cylindre de frein et
- un dispositif de positionnement électrique (6) étant prévu pour actionner l'au moins un cylindre de frein dans au moins une direction,
- une force d'assistance pouvant être déterminée dans au moins un moyen de calcul (23)
- la force d'assistance pouvant être appliquée par le dispositif de positionnement électrique,
- un premier capteur (20) destiné à générer un signal quantitatif en rapport avec la position opérationnelle relative du dispositif de positionnement électrique étant prévu, **caractérisé en ce que**
- il est prévu un deuxième capteur (18) pour générer un signal qualitatif en rapport avec la position opérationnelle approximative du dispositif de positionnement électrique et
- la position opérationnelle absolue momentanée du dispositif de positionnement électrique pouvant être déterminée à l'aide du moyen de calcul à partir du signal quantitatif et du signal qualitatif et une grandeur d'état de frein F1 pouvant en être déduite, laquelle correspond à un état réel d'un processus de freinage.

2. Dispositif selon la revendication 1, **caractérisé en ce que** le dispositif de positionnement électrique est réalisé sous la forme d'un servomoteur (6).

3. Dispositif selon la revendication 2, **caractérisé en ce que** le servomoteur (6) est réalisé sous la forme d'un moteur à courant continu sans balais.

4. Dispositif selon l'une des revendications 2 ou 3, **caractérisé en ce que** le premier capteur est réalisé sous la forme d'un capteur d'angle de rotation (20) à l'aide duquel peut être déterminée la position relative du rotor (8) du servomoteur (6).

5. Dispositif selon l'une des revendications mentionnées, **caractérisé en ce que** le deuxième capteur est prévu sous la forme d'un capteur de pression (18) pour évaluer la pression dans l'au moins un cylindre de frein, une plage de pression déterminée pouvant être associée explicitement à une position opérationnelle approximative du dispositif de positionnement électrique.

6. Dispositif selon la revendication 5, **caractérisé en ce qu'**à la plage de pression déterminée peut être associée explicitement une classe d'angle à l'aide de laquelle la position opérationnelle absolue momentanée du dispositif de positionnement électrique peut être déterminée à partir du signal quantitatif.

7. Dispositif selon l'une des revendications mentionnées, **caractérisé en ce que** l'au moins un cylindre de frein est réalisé sous la forme du maître-cylindre de frein (3) de l'équipement de freinage d'un véhicule.

8. Dispositif selon l'une des revendications mentionnées, **caractérisé en ce qu'**il est prévu un troisième capteur destiné à déterminer une grandeur d'état de frein F_{F} qui correspond au souhait de freinage entré par le conducteur par le biais du moyen d'entrée.

9. Dispositif selon la revendication 8, **caractérisé en ce que** le troisième capteur est réalisé sous la forme d'un capteur de force (11).

10. Dispositif selon la revendication 8 ou 9, **caractérisé en ce qu'**une grandeur d'état de frein F2 faisant office de valeur de consigne pour la force de freinage à appliquer peut être déterminée à partir de la grandeur d'état de frein F_{F} et la différence (F2 - F1) par rapport à la grandeur d'état de frein F1 peut être régulée par le biais du dispositif de positionnement électrique.

11. Dispositif selon l'une des revendications mentionnées, **caractérisé en ce qu'**au moins une grandeur d'état de frein (F_{F}, F1, F2) déterminée peut être convertie à l'aide du moyen de calcul en au moins un signal d'état de frein qui peut être mis à disposition à l'ensemble du système.

12. Dispositif selon l'une des revendications mentionnées, **caractérisé en ce que** la force d'assistance appliquée par le dispositif de positionnement électrique peut être induite dans le système de freinage au moins par le biais d'une broche filetée (9).

13. Dispositif selon l'une des revendications mentionnées, **caractérisé en ce que** l'au moins un moyen de calcul est réalisé sous la forme d'un composant d'un système destiné à réguler la stabilité du véhicule.

14. Procédé d'assistance électromécanique du freinage de véhicules,
- comprenant un moyen d'entrée (2) pouvant être influencé par un conducteur et qui est relié de manière motrice avec au moins un cylindre de frein et
- un dispositif de positionnement électrique (6) étant prévu pour actionner l'au moins un cylindre de frein dans au moins une direction,
- une force d'assistance étant déterminée dans au moins un moyen de calcul (23)
- la force d'assistance étant appliquée par le dispositif de positionnement électrique,
- un premier capteur (20) destiné à générer un signal quantitatif en rapport avec la position opérationnelle relative du dispositif de positionnement électrique étant prévu, **caractérisé en ce que**
- il est prévu un deuxième capteur (18) pour générer un signal qualitatif en rapport avec la position opérationnelle approximative du dispositif de positionnement électrique et
- la position opérationnelle absolue momentanée du dispositif de positionnement électrique étant déterminée à l'aide du moyen de calcul à partir du signal quantitatif et du signal qualitatif et une grandeur d'état de frein F1 en étant déduite, laquelle correspond à un état réel d'un processus de freinage.

15. Procédé selon la revendication 14, **caractérisé en ce que** le dispositif de positionnement électrique est réalisé sous la forme d'un servomoteur (6).

16. Procédé selon la revendication 15, **caractérisé en ce que** le servomoteur (6) est réalisé sous la forme d'un moteur à courant continu sans balais.

17. Procédé selon la revendication 15 ou 16, **caractérisé en ce que** le premier capteur est réalisé sous la forme d'un capteur d'angle de rotation (20) à l'aide duquel est déterminée la position relative du rotor (8) du servomoteur (6).

18. Procédé selon l'une des revendications 14 à 17, **caractérisé en ce que** le deuxième capteur est prévu sous la forme d'un capteur de pression (18) pour évaluer la pression dans l'au moins un cylindre de frein, une plage de pression déterminée étant associée explicitement à une position opérationnelle approximative du dispositif de positionnement électrique.

19. Procédé selon la revendication 18, **caractérisé en ce qu'**à la plage de pression déterminée est associée explicitement une classe d'angle à l'aide de laquelle la position opérationnelle absolue momentanée du dispositif de positionnement électrique est déterminée à partir du signal quantitatif.

20. Procédé selon l'une des revendications 14 à 19, **caractérisé en ce que** l'au moins un cylindre de frein est réalisé sous la forme du maître-cylindre de frein (3) de l'équipement de freinage d'un véhicule.

21. Procédé selon l'une des revendications 14 à 20, **caractérisé en ce qu'**il est prévu un troisième capteur destiné à déterminer une grandeur d'état de frein F_{F} qui correspond au souhait de freinage entré par le conducteur par le biais du moyen d'entrée.

22. Procédé selon la revendication 21, **caractérisé en ce que** le troisième capteur est réalisé sous la forme d'un capteur de force (11).

23. Procédé selon la revendication 21 ou 22, **caractérisé en ce qu'**une grandeur d'état de frein F2 faisant office de valeur de consigne pour la force de freinage à appliquer est déterminée à partir de la grandeur d'état de frein F_{F} et la différence (F2 - F1) par rapport à la grandeur d'état de frein F1 est régulée par le biais du dispositif de positionnement électrique.

24. Procédé selon l'une des revendications 14 à 23, **caractérisé en ce qu'**au moins une grandeur d'état de frein (F_{F}, F1, F2) déterminée est convertie à l'aide du moyen de calcul en au moins un signal d'état de frein qui est mis à disposition à l'ensemble du système.

25. Procédé selon l'une des revendications 14 à 24, **caractérisé en ce que** la force d'assistance appliquée par le dispositif de positionnement électrique est induite dans le système de freinage au moins par le biais d'une broche filetée (9).

26. Procédé selon l'une des revendications 14 à 25, **caractérisé en ce que** l'au moins un moyen de calcul est réalisé sous la forme d'un composant d'un système destiné à réguler la stabilité du véhicule.
